# EUROPÄISCHE PATENTSCHRIFT

(11) **EP 0 394 744 B1**
(45) Veröffentlichungstag und Bekanntmachung des Hinweises auf die Patenterteilung: **13.07.1994**
(21) Anmeldenummer: 90106854.4
(22) Anmeldetag: 10.04.1990
(51) Int. Cl.: H04M 1/02, H04B 1/38, H04Q 7/00

(54) **Funkgerät,insbesondere Autofunkgerät**
Radiotelephone e.g. for motorcars
Appareil radio, particulièrement pour automobiles

(30) Priorität: 24.04.1989 DE 8905152 U
(43) Veröffentlichungstag der Anmeldung: 31.10.1990
(73) Patentinhaber: SIEMENS AKTIENGESELLSCHAFT, 80333 München (DE)
(72) Erfinder: Meschenmoser, Friedrich, Dipl.-Ing. (FH), D-8000 München 90 (DE); Thomfohrde, Heiner, Ing. (grad), D-8044 Unterschleissheim (DE); Heiss, Reinhold, Dipl-Ing. (FH), D-8027 Neuried (DE); Stögmüller, Rupert, Dipl.-Ing. (FH), D-8000 München 83 (DE)

(56) Entgegenhaltungen:
- EP-A- 0 280 997
- GB-A- 2 196 210
- US-A- 4 227 258

## Beschreibung

Die Erfindung bezieht sich auf ein Funkgerät, insbesondere Autofunkgerät.

Ein derartiges Funkgerät wird z. Bsp. in der EP-A-0 280 997 offenbart.

Der Erfindung liegt die Aufgabe zugrunde, ein solches Gerät derart zu gestalten, daß es mit wenigen Handgriffen sowohl im tragbaren als auch im eingebauten Zustand verwendbar ist.

Diese Aufgabe wird gemäß der Erfindungdadurch gelöst, daß ein im Längsschnitt L-förmiger Rahmen vorgesehen ist, bei dem im längeren, in Normalstellung horizontal verlaufenden Schenkel des L ein Aufnahmefall (3a) für eine insbesondere ladbare Batterie vorgesehen ist und im dazu senkrecht verlaufenden kürzeren Schenkel der Schmalseite des L-Profils ein Anschlußfeld mit Stecker- Buchsenleiste (7,9), in das der Sendeempfänger (2) durch Verrastung mit dem längeren Schenkel des L-Profils einsteckbar ist.

Weitere vorteilhafte Ausgestaltungen finden sich in den Unteransprüchen.

Nachstehend wird die Erfindunganhand von Figuren naher erläutert.

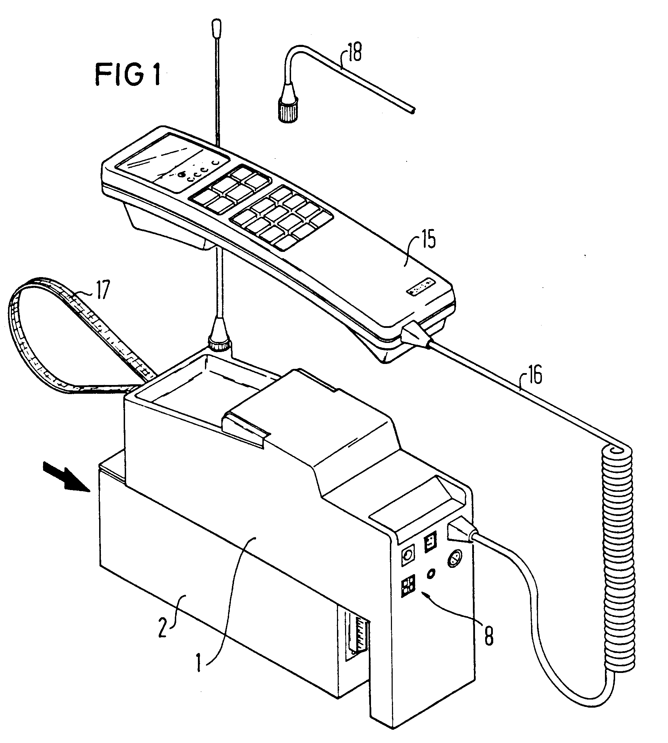

- Die Figur 1: zeigt den L-förmigen Rähmen 1 im nicht gerasteten Zustand des Sendeempfängers 2.

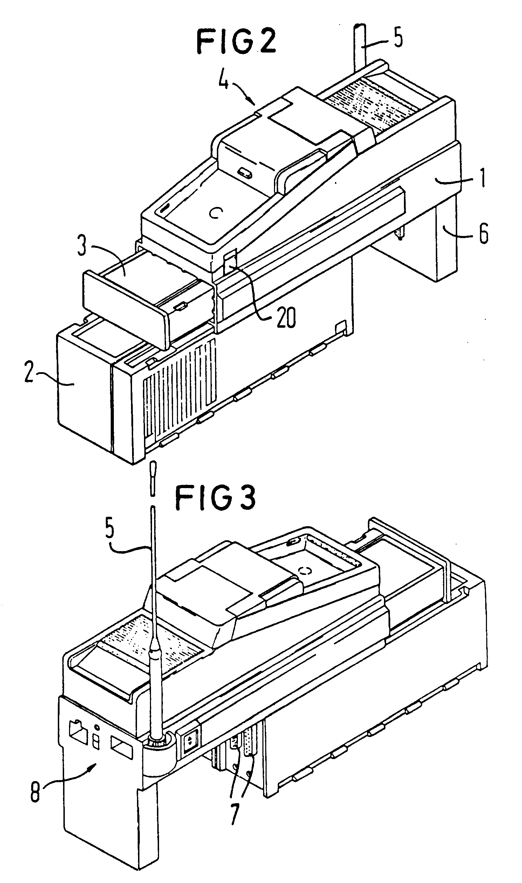

- Die Figur 2: zeigt eine Perspektive mit ausgezogenem Batteriefach.
- Die Figur 3: zeigt dasselbe in einer anderen Ansicht.

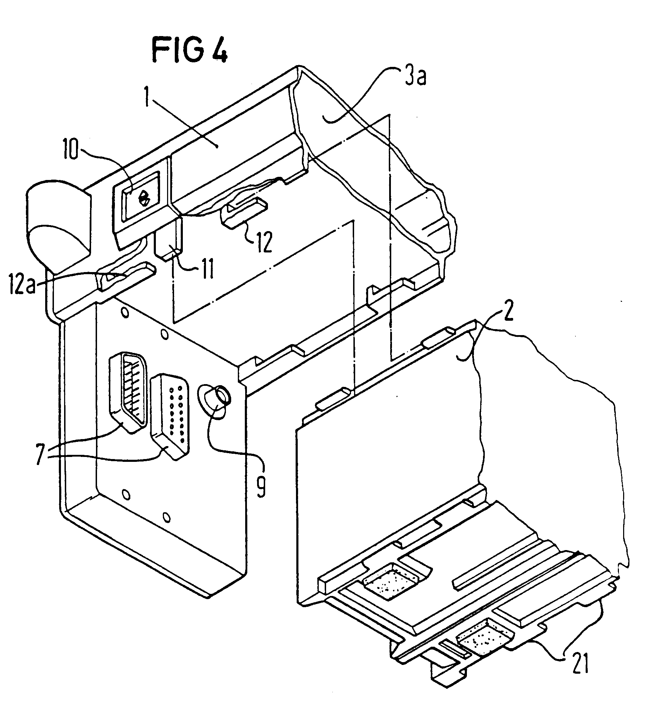

- Die Figur 4: zeigt Einzelheiten der Verrastung und des Anschlußfeldes.

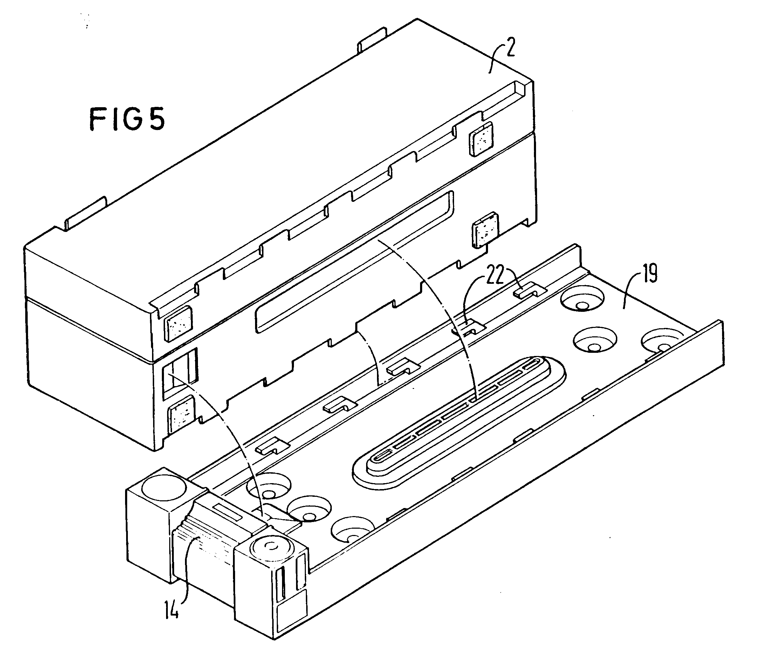

- Die Figur 5: zeigt die Befestigung des Sendeempfängers in einer wannenförmigen Befestigungseinheit 19 im Fahrzeug.

Das Grundgerät besteht im wesentlichen aus einem im Längsschnitt L-förmigen Rahmen 1. Dieser Tragrahmen hat auf der Oberseite eine Auflage 4 für den Handapparat 15. Im langen, waagerecht verlaufenden Schenkel des Profils ist ein Batteriefach 3a vorzugsweise mit einem Akkupak 3 vorgesehen. Im senkrecht dazu verlaufenden Schenkel des L-Profils befindet sich auf der Innenseite ein Anschlußfeld 6 für den in das Profil einschiebbaren Sendeempfänger 2. Das innere Anschlußfeld trägt Stecker- oder Buchsenleisten 7 und den Antennenstecker bzw. die Antennenbuchse 9.

Der Sendeempfänger 2 ist in den langen waagerechten Schenkeln von der Unterseite her einsteckbar und dann mit ihm verriegelbar. Die Befestigung erfolgt seitens des Grundrahmens mittels hakenförmiger Elemente 12, 12a, in die andererseits schienenförmige Nasen 13 auf der Oberseite des Sendeempfängers 2 eingreifen können. Die Befestigung erfolgt durch Schieben des Sendeempfängers 2 in Richtung zum Anschlußfeld bei welcher Bewegung gleichzeitig die elektrische Kontaktierung mit den Elementen 7, 9 stattfindet. Zur Verriegelung, das heißt zur Entnahme des Sendeempfängers 2, mit dem Rahmen 1 ist ein federnd vorgespannter Riegel 11 vorgesehen mit einer Taste 10, die im gerasteten Zustand derart einschnappt, daß der Sendeempfänger nicht aus der Einheit 1 gezogen werden kann.

Auf der Außenseite des senkrecht verlaufenden Schenkels des L-Profils ist ein äußeres Anschlußfeld 8 vorgesehen, in das beispielsweise die Anschlußschnur 16 des Handsprechapparates 15 einsteckbar ist, eine Ladevorrichtung und sonstige Signal- Zu- oder Ableitungen vom Gerät.

Die vorstehende Anordnung hat vor allem den Vorteil, daß die Anschlußelemente, insbesondere die Steckeinheiten 7, 9 im Inneren des L-förmigen Profils gegen mechanische Beeinflussung geschützt liegen. Eine interne Antenne 5 ist seitlich im L-Profil angeordnet. Eine externe Antenne 18 läßt sich statt dieser an dieselbe Antennenbuchse anschließen.

Die gesamte Einheit läßt sich mit an der Unterseite des Sendeempfängers 2 angeordneten länglichen Nasen 21 in eine mit entsprechenden Aufnahmehaken 22 versehenen Befestigungseinheit 19, die normalerweise im Fahrzeug fest angeordnet ist, einstecken. Diese Befestigungseinheit hat eine rein mechanische Haltefunktion. Mittels der Taste 14 läßt sich die Verriegelung von 2 mit 19 zur Entnahme leicht aufheben.

Für mobilen Betrieb außerhalb des Fahrzeugs ist schließlich ein Tragriemen 17 vorgesehen.

Mit 20 ist eine Entriegelungstaste für die Entnahme des Akkupaks angedeutet, die jedoch auch an anderer Stelle angeordnet sein kann.

## Patentansprüche

1. Funkgerät, insbesondere Autofunkgerät,
**dadurch gekennzeichnet,**
daß ein in Längsschnitt L-förmiger Rahmen (1) vorgesehen ist, bei dem im längeren, in Normalstellung horizontal verlaufenden Schenkel des L ein Aufnahmefall (3a) für eine insbesondere ladbare Batterie (3) vorgesehen ist und im dazu senkrecht verlaufenden kürzeren Schenkel der Schmalseite des L-Profils ein Anschlußfeld mit Stecker- Buchsenleisten (7,9), in das der Sendeempfänger (2) durch Verrastung mit dem längeren Schenkel des L-Profils einsteckbar ist.

2. Funkgerät nach Anspruch 1,
**dadurch gekennzeichnet,**
daß sich auf der Unterseite des L-Profils beidseits haken förmige Elemente (12, 12a) befinden, die in einem derartigen Abstand voneinander angeordnet sind, daß an der Funkgeräteoberseite angeordnete längliche schienenförmige Nasen (13) in diese Haken durch Längsverschiebung der beiden Körper einrastbar sind und daß im arretierten Zustand ein Riegel (11) gegen Längsverschiebung beider Teile sorgt.

3. Funkgerät nach einem der vorhergehenden Ansprüche,
**dadurch gekennzeichnet,**
daß im Anschlußfeld (6) zum Gerät (2) hin sämtliche Steckanschlüsse in Form von Stecker- oder Buchsenleisten (7, 9) auf der Innenseite angeordnet sind.

4. Funkgerät nach einem der vorhergehenden Ansprüche,
**dadurch gekennzeichnet,**
daß die Oberseite des L-förmgien Grundrahmens so geformt ist, daß ein Handapparat (15) samt Tastatur dazu auflegbar und befestigbar ist.

5. Funkgerät nach einem der vorhergehenden Ansprüche,
**dadurch gekennzeichnet,**
daß an der Außenfläche des senkrechten Schenkels des L-Profils Anschlußstecker oder Buchseneinheiten 8 vorgesehen sind, die zur zusätzlichen Stromversorgung, dem Anschluß des Handapparates und anderer Signalzu- oder -ableitungen dienen.

6. Funkgerät nach einem der vorhergehenden Ansprüche,
**dadurch gekennzeichnet,**
daß im Bereich der Zusammenführung beider Schenkel des L seitwärts der Halterung eine Antenne (5) angeordnet ist.

7. Funkgerät nach einem der vorhergehenden Ansprüche,
**dadurch gekennzeichnet,**
daß die gesamte Einheit Rahmen (1) und Sendeempfänger (2) mit auf der Unterseite des Sendeempfängers vorgesehenen länglichen Nasen in entsprechende Haken einer Befestigungseinheit (19) in einem Fahrzeug einrastbar ist.

## Claims

1. Radiotelephone, in particular for motor cars, characterized in that a frame (1) which is L-shaped in longitudinal section is provided in which in the longer leg, which extends horizontally in the normal position, of the L a receiving drop [sic] (3a) for an especially chargeable battery (3) is provided and in the shorter leg, which extends perpendicularly thereto, of the narrow side of the L section a connecting panel with plug/socket strips (7, 9), into which the transceiver (2) can be inserted by interlocking with the longer leg of the L section.

2. Radiotelephone according to Claim 1, characterized in that on both sides of the underside of the L section hook-shaped elements (12, 12a) are located which are arranged at such a distance from one another that elongated rail-shaped noses (13) arranged at the top of the radiotelephone can be latched into these hooks by longitudinal displacement of the two bodies and in that in the locked state, a locking bar (11) protects against longitudinal displacement of both parts.

3. Radiotelephone according to one of the preceding claims, characterized in that, in the connecting panel (6), all plug-in connections towards the apparatus (2) are arranged on the inside in the form of plug or socket strips (7, 9).

4. Radiotelephone according to one of the preceding claims, characterized in that the top of the L-shaped basic frame is shaped in such a manner that a handset (15) and keypad can be placed on it and attached to it.

5. Radiotelephone according to one of the preceding claims, characterized in that on the outer surface of the vertical leg of the L section, connecting plugs or socket units 8 are provided which are used for additional power supply, connecting the handset and other signal feed or output lines.

6. Radiotelephone according to one of the preceding claims, characterized in that an antenna (5) is arranged on the side of the holder in the area where both legs of the L are brought together.

7. Radiotelephone according to one of the preceding claims, characterized in that the total unit of frame (1) and transceiver (2) can be locked with elongated noses provided on the underside of the transceiver into corresponding hooks of a mounting unit (19) in a vehicle.

## Revendications

1. Appareil radio, notamment autoradio, caractérisé par le fait qu'il est prévu un cadre (1) en forme de L en coupe longitudinale, dans lequel un logement (3a) pour une pile, notamment rechargeable, (3) est prévu dans la branche la plus longue du L, qui s'étend horizontalement dans la position normale, et un panneau de raccordement disposé dans la branche la plus courte horizontale du petit côté du profil en L et comportant des barrettes à fiches ou de barrettes à douilles (7, 9) et dans lequel l'émetteur-récepteur (2) peut être enfiché par encliquetage au moyen de la branche la plus longue du profil en L.

2. Appareil radio suivant la revendication 1, caractérisé par le fait que sur la face inférieure du profil en L sont disposés, des deux côtés, des éléments en forme de crochets (12, 12a), qui sont situés à une distance réciproque telle que des ergots en forme de rails allongés (13) situés sur la face supérieure de l'appareil radio peuvent être encliquetés dans ces crochets sous l'effet d'un déplacement longitudinal des deux corps, et que dans l'état bloqué, un verrou (11) bloque tout déplacement longitudinal des deux parties.

3. Appareil radio suivant l'une des revendications précédentes, caractérisé par le fait que toutes les bornes à enfichage réalisées sous la forme de barrettes de fiches ou de barrettes à douilles (7, 9) sont disposées sur la face intérieure dans le panneau de raccordement (6), en étant dirigées vers l'appareil (2).

4. Appareil radio suivant l'une des revendications précédentes, caractérisé par le fait que la face supérieure du cadre de base en forme de L est conformée de telle sorte que l'on peut y placer et y fixer un combiné (15) y compris un clavier.

5. Appareil radio suivant l'une des revendications précédentes, caractérisé par le fait que sur la face extérieure de la branche verticale du profil en L sont prévues des fiches de raccordement ou des unités à douilles (8), qui sont utilisées pour l'alimentation supplémentaire en courant, pour le raccordement du combiné et pour d'autres lignes d'arrivée ou de départ de signaux.

6. Appareil radio suivant l'une des revendications précédentes, caractérisé par le fait qu'une antenne (5) est disposée dans la zone où se rejoignent les deux branches du L, du côté du support.

7. Appareil radio suivant l'une des revendications précédentes, caractérisé par le fait que l'ensemble de l'unité comprenant le cadre (1) et l'émetteur-récepteur (2) peut être encliquetée, au moyen de becs allongés prévus sur la face inférieure de l'émetteur-récepteur, dans des crochets correspondants d'une unité de fixation (19) dans un véhicule.
